# EUROPEAN PATENT APPLICATION

(11) **EP 4 572 498 A1**
(43) Date of publication of application: **18.06.2025**
(21) Application number: 23869934.2
(22) Date of filing: 20.07.2023
(51) Int. Cl.: H04W 72/232

(54) **METHOD FOR DETERMINING RESOURCES, AND COMMUNICATION APPARATUS**

(30) Priority: 30.09.2022 CN 202211214372
(71) Applicant: Huawei Technologies Co., Ltd., Shenzhen, Guangdong 518129 (CN)
(72) Inventor: JIAO, Shurong, Shenzhen, Guangdong 518129 (CN); HUA, Meng, Shenzhen, Guangdong 518129 (CN)
(74) Representative: Grünecker Patent- und Rechtsanwälte PartG mbB
(86) International application number: PCT/CN2023/108277
(87) International publication number: WO 2024/066687

(57) **Abstract**

This application discloses a resource determining method. The method includes: A terminal device receives a target rate match parameter from a network device, where the target rate match parameter includes association information, and the association information indicates to associate at least one of a frequency domain position parameter or a time domain position parameter of a first time-frequency resource. The terminal device determines a second time-frequency resource based on the association information, where a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by the network device for the terminal device. The terminal device determines, based on the second time-frequency resource, a time-frequency resource that is in the downlink time-frequency resource and that is used for transmission of downlink data. According to solutions provided in this application, a time-frequency resource that cannot be used for transmission of user data and a DMRS can be quickly determined based on the association information.

## Description

This application claims priority to Chinese Patent Application No. 202211214372.5, filed with the China National Intellectual Property Administration on September 30, 2022 and entitled "RESOURCE DETERMINING METHOD AND COMMUNICATION APPARATUS", which is incorporated herein by reference in its entirety.

### TECHNICAL FIELD

This application relates to the field of communication technologies, and specifically, to a resource determining method and a communication apparatus.

### BACKGROUND

In a new radio (new radio, NR) system, a physical downlink control channel (physical downlink control channel, PDCCH) carries downlink control information (downlink control information, DCI). A terminal device may determine, based on a frequency domain resource assignment (frequency domain resource assignment) and a time domain resource assignment (time domain resource assignment) in the DCI, a physical downlink shared channel (physical downlink shared channel, PDSCH) that carries user data and a demodulation reference signal (Demodulation Reference Signal, DMRS), in other words, determine positions of the user data and the DMRS in a time-frequency resource, to receive downlink data.

However, some time-frequency resources that cannot be used for transmission of the user data and the DMRS are defined in the NR system. When a network device delivers the DCI, these time-frequency resources are not excluded. The terminal device determines, based on a rate match pattern (rate match pattern), the time-frequency resources that cannot be used for the transmission of the user data and the DMRS. Then, the time-frequency resources that cannot be used for the transmission of the user data and the DMRS are excluded from time-frequency resources determined based on the DCI, to correctly receive the downlink data.

A current rate match pattern is indicated by a resource block (resource block, RB) bitmap (bitmap) in frequency domain and a symbol (symbol) bitmap (bitmap) in time domain. When a value of a resource position in the two bitmaps is 1, it indicates that the resource position cannot be used for the transmission of the user data and the DMRS. Because there are numerous bits in one bitmap, heavy computing workloads are required in the current manner of determining the time-frequency resource that cannot be used for the transmission of the user data and the DMRS. Consequently, it takes a long time for determining the time-frequency resource.

### SUMMARY

This application provides a resource determining method, to quickly determine a time-frequency resource that cannot be used for transmission of user data and a DMRS. This application further provides a corresponding apparatus, system, computer-readable storage medium, computer program product, and the like.

A first aspect of this application provides a resource determining method, including: A terminal device receives a target rate match parameter from a network device, where the target rate match parameter includes association information, and the association information indicates to associate at least one of a frequency domain position parameter or a time domain position parameter of a first time-frequency resource. The terminal device determines a second time-frequency resource based on the association information, where a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by the network device for the terminal device. The terminal device determines, based on the second time-frequency resource, a time-frequency resource that is in the downlink time-frequency resource and that is used for transmission of downlink data.

In this application, the time-frequency resource is a frequency domain resource and a time domain resource.

In this application, the frequency domain resource is a resource indicated by using a resource block (resource block, RB), a resource element (resource element, RE), or/and a resource block group (resource block group, RBG). One RB usually has 12 subcarriers, one RE is usually one subcarrier, and one RBG is usually N RBs. N is a positive integer preset in a protocol or configured by the network device. The frequency domain position parameter may be an index or a number of the RB or the RE.

In this application, the time domain resource is a resource indicated by using a slot (slot) or a time domain symbol (symbol). The time domain position parameter may be an index or a number of the slot or the symbol.

In this application, the target rate match parameter may be a set of rate match parameters determined by the network device from a plurality of sets of candidate rate match parameters, and each set of candidate rate match parameters includes at least one rate match parameter.

In this application, the association information may be an identifier or an index.

In this application, the first time-frequency resource may be a time-frequency resource that is in the downlink time-frequency resource configured by the network device for the terminal device and that is restricted from downlink use, or may be the time-frequency resource that is in the downlink time-frequency resource and that is used for the transmission of the downlink data. When the first time-frequency resource is the time-frequency resource restricted from the downlink use, it indicates that the first time-frequency resource can be used for uplink transmission, or may indicate that the first time-frequency resource cannot be used for either downlink transmission or uplink transmission.

In this application, when the first time-frequency resource is the time-frequency resource restricted from the downlink use, the second time-frequency resource is the first time-frequency resource. When the first time-frequency resource is the time-frequency resource that is in the downlink time-frequency resource and that is used for the transmission of the downlink data, the second time-frequency resource may be obtained through computation by using the downlink time-frequency resource and the first time-frequency resource.

In this application, the terminal device may determine, based on the association information in the target rate match parameter, a time-frequency resource that cannot be used for the transmission of the downlink data, and the network device does not need to specially send, to the terminal device, a bitmap used for rate match, so that communication overheads between the network device and the terminal device are reduced. In addition, the first time-frequency resource is usually continuous, so that computing overheads of determining, by the terminal device, the time-frequency resource that cannot be used for the transmission of the downlink data can be reduced.

In a possible implementation, the method further includes: The terminal device receives a bandwidth configuration parameter from the network device, where the bandwidth configuration parameter includes the frequency domain position parameter and the time domain position parameter of the first time-frequency resource; and correspondingly, the association information indicates to associate the frequency domain position parameter and the time domain position parameter of the first time-frequency resource.

In this possible implementation, if the network device has configured the frequency domain position parameter and the time domain position parameter for the first time-frequency resource during bandwidth configuration, when sending the target rate match parameter, instead of repeatedly sending the configured frequency domain position parameter and the configured time domain position parameter of the first time-frequency resource, the network device only needs to send the association information, and the frequency domain position parameter and the time domain position parameter that have been configured for the first time-frequency resource that the terminal device already has can be associated with based on the association information, so that communication overheads between the network device and the terminal device are reduced.

In a possible implementation, the method further includes: The terminal device receives a bandwidth configuration parameter, where the bandwidth configuration parameter includes the time domain position parameter of the first time-frequency resource, and correspondingly, the target rate match parameter further includes the frequency domain position parameter of the second time-frequency resource, and the association information indicates to associate the time domain position parameter of the first time-frequency resource; or the bandwidth configuration parameter includes the frequency domain position parameter of the first time-frequency resource, and correspondingly, the target rate match parameter further includes the time domain position parameter of the first time-frequency resource, and the association information indicates to associate the frequency domain position parameter of the first time-frequency resource.

In this possible implementation, if the network device has configured the frequency domain position parameter or the time domain position parameter for the first time-frequency resource during bandwidth configuration, when sending the target rate match parameter, instead of repeatedly sending the configured frequency domain position parameter or the configured time domain position parameter of the time-frequency resource, the network device only needs to send the time domain position parameter or the frequency domain position parameter of the second time-frequency resource that the terminal device does not have, and then the second time-frequency resource can be determined based on the association information indicating to associate the time domain position parameter or the frequency domain position parameter of the second time-frequency resource with the frequency domain position parameter or the time domain position parameter of the first time-frequency resource that the terminal device already has, so that communication overheads between the network device and the terminal device are reduced.

In a possible implementation, when the first time-frequency resource is the time-frequency resource that is in the downlink time-frequency resource and that is used for the transmission of the downlink data, the foregoing step, that is, that the terminal device determines a second time-frequency resource based on the association information includes: The terminal device determines the frequency domain position parameter of the second time domain resource based on a frequency domain position parameter of the downlink time-frequency resource and the frequency domain position parameter that is of the first time domain resource and that is indicated by the association identifier. The terminal device determines the time domain position parameter of the second time domain resource based on a time domain position parameter of the downlink time-frequency resource and the time domain position parameter that is of the first time domain resource and that is indicated by the association identifier. The terminal device determines the second time-frequency resource based on the frequency domain position parameter and the time domain position parameter of the second time domain resource.

In this possible implementation, when the first time-frequency resource is the time-frequency resource that is in the downlink time-frequency resource and that is used for the transmission of the downlink data, the terminal device may obtain, through simple computation, the second time-frequency resource that cannot be used for downlink transmission, to improve configuration flexibility of the network device.

In a possible implementation, when the first time-frequency resource is the time-frequency resource that is in the downlink time-frequency resource and that is restricted from the downlink use, the time-frequency resource restricted from the downlink use includes a time-frequency resource used for transmission of uplink data; or the time-frequency resource restricted from the downlink use includes a time-frequency resource used for transmission of uplink data and a guard time-frequency resource, where the guard time-frequency resource is located between the time-frequency resource used for the transmission of the uplink data and the time-frequency resource that is in the downlink time-frequency resource and that is used for the transmission of the downlink data.

In this possible implementation, when the first time-frequency resource is a time-frequency resource that is in the downlink time-frequency resource and that is used for uplink transmission, the network device may further configure the guard time-frequency resource in the downlink time-frequency resource, to reduce interference between the uplink transmission and downlink transmission.

In a possible implementation, when an uplink subcarrier spacing that is of the first time-frequency resource and that is configured by the network device is different from a downlink subcarrier spacing of the downlink time-frequency resource, a subcarrier spacing of the guard time-frequency resource may be either of the following: a smaller one of the uplink subcarrier spacing and the downlink subcarrier spacing; or a configuration value of the network device, where the configuration value is not greater than a smaller one of the uplink subcarrier spacing and the downlink subcarrier spacing.

In this possible implementation, the subcarrier spacing is usually the smaller one of the uplink subcarrier spacing and the downlink subcarrier spacing. In this way, a waste of downlink time-frequency resources is further reduced as much as possible while interference between uplink transmission and downlink transmission is reduced, thereby improving time-frequency resource utilization.

In a possible implementation, the method further includes: If the downlink subcarrier spacing of the downlink time-frequency resource is greater than the uplink subcarrier spacing of the first time-frequency resource, the target rate match parameter is configured based on the uplink subcarrier spacing, and the terminal device determines that a first resource unit of the first time-frequency resource does not fully occupy a second resource unit, the second resource unit is excluded from the time-frequency resource used by a user for the transmission of the downlink data, where the first resource unit is a resource block or a resource element configured based on the uplink subcarrier spacing, and the second resource unit is a resource block or a resource element configured based on the downlink subcarrier spacing.

In this possible implementation, if the downlink subcarrier spacing of the downlink time-frequency resource is greater than the uplink subcarrier spacing of the first time-frequency resource, one downlink RE or one downlink RB is not fully occupied (in other words, occupied but not fully occupied) by one uplink RE or one uplink RB at an uplink-downlink boundary. In this case, if an unoccupied part of the downlink RE or the downlink RB is still used for downlink transmission, transmission quality is affected. Therefore, even if the downlink RE or the downlink RB is not fully occupied, the unoccupied part of the downlink RE or the downlink RB is not used for the transmission of the downlink data. In this way, data transmission quality can be improved.

In a possible implementation, the bandwidth configuration parameter includes the time domain position parameter of the first time-frequency resource, and a downlink subcarrier spacing that is of the downlink time-frequency resource and that is configured by the network device is less than an uplink subcarrier spacing of the first time-frequency resource. If determining that a first time domain unit of the first time-frequency resource in time domain does not fully occupy a second time domain unit, the terminal device determines that the second time domain unit cannot be used for downlink transmission. The first time domain unit is a slot or a time domain symbol configured based on the uplink subcarrier spacing, and the second time domain unit is a slot or a time domain symbol configured based on the downlink subcarrier spacing.

In this possible implementation, if a downlink slot or a downlink time domain symbol in time domain is not fully occupied by an uplink slot or an uplink time domain symbol, an unoccupied part of the downlink slot or the downlink time domain symbol is not used for downlink data transmission. In this way, data transmission quality can be improved.

In a possible implementation, when an index that is in the time domain position parameter of the first time domain resource and that indicates a time domain unit is a slot index, a slot indicated by the slot index includes either of the following: a downlink symbol but no flexible symbol; or a downlink symbol and a flexible symbol.

In a possible implementation, when the slot indicated by the slot index includes the downlink symbol but no flexible symbol, the first time-frequency resource is located on the downlink symbol.

In a possible implementation, when the slot indicated by the slot index includes the downlink symbol and the flexible symbol, the first time-frequency resource is located on the downlink symbol but no flexible symbol of the slot.

In a possible implementation, when the slot indicated by the slot index includes the downlink symbol and the flexible symbol, the first time-frequency resource is located on the downlink symbol and the flexible symbol.

In a possible implementation, distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

In this application, the target rate match parameter is usually a set of parameters, and one set of parameters corresponds to one candidate rate match pattern. The set of parameters includes the frequency domain position parameter and the time domain position parameter of the second time-frequency resource.

The foregoing several possible implementations indicate that the network device may flexibly configure the second time-frequency resource in the downlink time-frequency resource.

In a possible implementation, the method further includes: The terminal device reports first capability information to the network device, where the first capability information indicates that the distribution patterns of the second time-frequency resource in the N slots are counted as 1 or N when serving as the candidate rate match patterns, and the target rate match parameter is the at least one parameter of one of the candidate rate match patterns.

In this possible implementation, after the terminal device reports the first capability information, the network device may configure the candidate rate match patterns for the terminal device based on the distribution patterns of the first time-frequency resource in the N slots. In this way, when the distribution patterns of the first time-frequency resource in the N slots are counted as N, accuracy and efficiency of rate match can be further improved. When the distribution patterns are counted as N, a probability that the terminal device uses a bitmap can be reduced, thereby reducing implementation complexity of the terminal device.

In a possible implementation, when the target rate match parameter is configured at a cell level, the method further includes: The terminal device receives a reference subcarrier spacing of the first time-frequency resource, where the reference subcarrier spacing is different from a subcarrier spacing of the downlink time-frequency resource, and if the terminal device determines that a third resource unit of the first time-frequency resource does not fully occupy a fourth resource unit, the fourth resource unit is excluded from the time-frequency resource used by a user for the transmission of the downlink data, where the third resource unit is a resource block or a resource element configured based on the reference subcarrier spacing, and the fourth resource unit is a resource block or a resource element configured based on the downlink subcarrier spacing.

In this possible implementation, when the third resource unit does not fully occupy the fourth resource unit, the fourth resource unit is excluded from the time-frequency resource used by the user for the transmission of the downlink data, so that downlink data transmission quality can be improved.

In a possible implementation, the second time-frequency resource can be used to carry a downlink demodulation reference signal DMRS.

In this possible implementation, because the second time-frequency resource is a continuous resource that cannot be used for downlink transmission, even if the downlink DMRS is carried on the second time-frequency resource, demodulation of other downlink data is not affected provided that the downlink DMRS part is removed.

In a possible implementation, the method further includes: The terminal device reports second capability information to the network device, where the second capability information indicates a largest quantity of candidate rate match patterns that can be supported by the terminal device, and the target rate match parameter is at least one parameter of one of the candidate rate match patterns.

In this possible implementation, the terminal device reports, to the network device, the largest quantity of candidate rate match patterns that can be supported, to help the network device improve configuration accuracy.

A second aspect of this application provides a resource determining method, including: A network device determines a first time-frequency resource from a downlink time-frequency resource of a terminal device. The network device sends a target rate match parameter to the terminal device, where the target rate match parameter includes association information, the association information indicates to associate at least one of a frequency domain position parameter or a time domain position parameter of the first time-frequency resource, the association information is used by the terminal device to determine a second time-frequency resource, a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by the network device for the terminal device.

In a possible implementation, the method further includes: The network device sends a bandwidth configuration parameter to the terminal device, where the bandwidth configuration parameter includes the frequency domain position parameter and the time domain position parameter of the first time-frequency resource; and correspondingly, the association information indicates to associate the frequency domain position parameter and the time domain position parameter of the first time-frequency resource.

In a possible implementation, the method further includes: The network device sends a bandwidth configuration parameter to the terminal device, where the bandwidth configuration parameter includes the time domain position parameter of the first time-frequency resource, and correspondingly, the target rate match parameter further includes the frequency domain position parameter of the second time-frequency resource, and the association information indicates to associate the time domain position parameter of the first time-frequency resource; or the bandwidth configuration parameter includes the frequency domain position parameter of the first time-frequency resource, and correspondingly, the target rate match parameter further includes the time domain position parameter of the second time-frequency resource, and the association information indicates to associate the frequency domain position parameter of the first time-frequency resource.

In a possible implementation, the first time-frequency resource is a time-frequency resource that is in the downlink time-frequency resource and that is restricted from downlink use, or the first time-frequency resource is a time-frequency resource that is in the downlink time-frequency resource and that is used for transmission of downlink data.

In a possible implementation, when an index that is in the time domain position parameter of the first time domain resource and that indicates a time domain unit is a slot index, a slot indicated by the slot index includes either of the following: a downlink symbol but no flexible symbol; or a downlink symbol and a flexible symbol.

In a possible implementation, when the slot indicated by the slot index includes the downlink symbol but no flexible symbol, the first time-frequency resource is located on the downlink symbol.

In a possible implementation, when the slot indicated by the slot index includes the downlink symbol and the flexible symbol, the first time-frequency resource is located on the downlink symbol but no flexible symbol of the slot.

In a possible implementation, when the slot indicated by the slot index includes the downlink symbol and the flexible symbol, the first time-frequency resource is located on the downlink symbol and the flexible symbol.

In a possible implementation, distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

In a possible implementation, the method further includes: The network device receives first capability information sent by the terminal device, where the first capability information indicates that the distribution patterns of the second time-frequency resource in the N slots are counted as 1 or N when serving as the candidate rate match patterns, and the target rate match parameter is the at least one parameter of one of the candidate rate match patterns.

In a possible implementation, the second time-frequency resource can be used to carry a downlink demodulation reference signal DMRS.

In a possible implementation, the method further includes: The network device receives second capability information sent by the terminal device, where the second capability information indicates a largest quantity of candidate rate match patterns that can be supported by the terminal device, and the target rate match parameter is at least one parameter of one of the candidate rate match patterns.

A third aspect of this application provides a resource determining method, including: A terminal device receives a target rate match parameter, where the target rate match parameter includes a frequency domain position parameter and a time domain position parameter of a first time domain resource; and determines a second time-frequency resource based on the frequency domain position parameter and the time domain position parameter of the first time domain resource, where a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by a network device for the terminal device. The terminal device determines, based on the second time-frequency resource, a time-frequency resource that is in the downlink time-frequency resource and that is used for transmission of downlink data.

In a possible implementation, when an index that is in the time domain position parameter of the first time domain resource and that indicates a time domain unit is a slot index, a slot indicated by the slot index includes either of the following: a downlink symbol but no flexible symbol; or a downlink symbol and a flexible symbol.

In a possible implementation, when the slot indicated by the slot index includes the downlink symbol but no flexible symbol, the first time-frequency resource is located on the downlink symbol.

In a possible implementation, when the slot indicated by the slot index includes the downlink symbol and the flexible symbol, the first time-frequency resource is located on the downlink symbol but no flexible symbol of the slot.

In a possible implementation, when the slot indicated by the slot index includes the downlink symbol and the flexible symbol, the first time-frequency resource is located on the downlink symbol and the flexible symbol.

In a possible implementation, distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

The foregoing several possible implementations indicate that the network device may flexibly configure the second time-frequency resource in the downlink time-frequency resource.

In a possible implementation, the method further includes: The terminal device reports first capability information to the network device, where the first capability information indicates that the distribution patterns of the second time-frequency resource in the N slots are counted as 1 or N when serving as the candidate rate match patterns, and the target rate match parameter is the at least one parameter of one of the candidate rate match patterns.

In this possible implementation, after the terminal device reports the first capability information, the network device may configure the candidate rate match patterns for the terminal device based on the distribution patterns of the first time-frequency resource in the N slots. In this way, when the distribution patterns of the first time-frequency resource in the N slots are counted as N, accuracy and efficiency of rate match can be further improved.

In a possible implementation, when the target rate match parameter is configured at a cell level, the method further includes: The terminal device receives a reference subcarrier spacing of the first time-frequency resource, where the reference subcarrier spacing is different from a subcarrier spacing of the downlink time-frequency resource, and if the terminal device determines that a third resource unit of the first time-frequency resource does not fully occupy a fourth resource unit, the fourth resource unit is excluded from the time-frequency resource used by a user for the transmission of the downlink data, where the third resource unit is a resource block or a resource element configured based on the reference subcarrier spacing, and the fourth resource unit is a resource block or a resource element configured based on the downlink subcarrier spacing.

In this possible implementation, when the third resource unit does not fully occupy the fourth resource unit, the fourth resource unit is excluded from the time-frequency resource used by the user for the transmission of the downlink data, so that downlink data transmission quality can be improved.

In a possible implementation, the second time-frequency resource can be used to carry a downlink demodulation reference signal DMRS.

In this possible implementation, because the second time-frequency resource is a continuous resource that cannot be used for downlink transmission, even if the downlink DMRS is carried on the second time-frequency resource, demodulation of other downlink data is not affected provided that the downlink DMRS part is removed.

In a possible implementation, the method further includes: The terminal device reports second capability information to the network device, where the second capability information indicates a largest quantity of candidate rate match patterns that can be supported by the terminal device, and the target rate match parameter is at least one parameter of one of the candidate rate match patterns.

In this possible implementation, the terminal device reports, to the network device, the largest quantity of candidate rate match patterns that can be supported, to help the network device improve configuration accuracy.

A fourth aspect of this application provides a resource determining method, including: A network device determines a first time-frequency resource from a downlink time-frequency resource of a terminal device. The network device sends a target rate match parameter to the terminal device, where the target rate match parameter includes a frequency domain position parameter and a time domain position parameter of the first time domain resource, the frequency domain position parameter and the time domain position parameter of the first time domain resource are used by the terminal device to determine a second time-frequency resource, a frequency domain position parameter of the second time-frequency resource is associated with the frequency domain position parameter of the first time-frequency resource, and a time domain position parameter of the second time-frequency resource is associated with the time domain position parameter of the first time-frequency resource.

In a possible implementation, the first time-frequency resource is a time-frequency resource that is in the downlink time-frequency resource and that is restricted from downlink use, or the first time-frequency resource is a time-frequency resource that is in the downlink time-frequency resource and that is used for transmission of downlink data.

In a possible implementation, when an index that is in the time domain position parameter of the first time domain resource and that indicates a time domain unit is a slot index, a slot indicated by the slot index includes either of the following: a downlink symbol but no flexible symbol; or a downlink symbol and a flexible symbol.

In a possible implementation, when the slot indicated by the slot index includes the downlink symbol but no flexible symbol, the first time-frequency resource is located on the downlink symbol.

In a possible implementation, when the slot indicated by the slot index includes the downlink symbol and the flexible symbol, the first time-frequency resource is located on the downlink symbol but no flexible symbol of the slot.

In a possible implementation, when the slot indicated by the slot index includes the downlink symbol and the flexible symbol, the first time-frequency resource is located on the downlink symbol and the flexible symbol.

In a possible implementation, distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

In a possible implementation, the method further includes: The network device receives first capability information sent by the terminal device, where the first capability information indicates that the distribution patterns of the second time-frequency resource in the N slots are counted as 1 or N when serving as the candidate rate match patterns, and the target rate match parameter is the at least one parameter of one of the candidate rate match patterns.

In a possible implementation, the second time-frequency resource can be used to carry a downlink demodulation reference signal DMRS.

In a possible implementation, the method further includes: The network device receives second capability information sent by the terminal device, where the second capability information indicates a largest quantity of candidate rate match patterns that can be supported by the terminal device, and the target rate match parameter is at least one parameter of one of the candidate rate match patterns.

A fifth aspect of this application provides a communication apparatus is provided. The communication apparatus includes a transceiver module and a processing module. The transceiver module is configured to perform receiving and sending operations in the method according to any one of the first aspect or the possible implementations of the first aspect, and the processing module is configured to perform a processing operation such as a determining operation in the method according to any one of the first aspect or the possible implementations of the first aspect.

A sixth aspect of this application provides a communication apparatus is provided. The communication apparatus includes a transceiver module and a processing module. The transceiver module is configured to perform receiving and sending operations in any one of the second aspect or the possible implementations of the second aspect, and the processing module is configured to perform a processing operation such as a determining operation in any one of the second aspect or the possible implementations of the second aspect.

A seventh aspect of this application provides a communication apparatus is provided. The communication apparatus includes a transceiver module and a processing module. The transceiver module is configured to perform receiving and sending operations in the method according to any one of the third aspect or the possible implementations of the third aspect, and the processing module is configured to perform a processing operation such as a determining operation in the method according to any one of the third aspect or the possible implementations of the third aspect.

An eighth aspect of this application provides a communication apparatus is provided. The communication apparatus includes a transceiver module and a processing module. The transceiver module is configured to perform receiving and sending operations in any one of the fourth aspect or the possible implementations of the fourth aspect, and the processing module is configured to perform a processing operation such as a determining operation in any one of the fourth aspect or the possible implementations of the fourth aspect.

A ninth aspect of this application provides a communication apparatus. The communication apparatus includes a processor, a memory, and a transceiver. The memory stores a computer program or computer instructions. The processor is configured to invoke and run the computer program or the computer instructions stored in the memory, to enable the processor to implement a processing operation in any one of the first aspect or the possible implementations of the first aspect. The transceiver is configured to receive and send signals, for example, implement receiving and sending operations in any one of the first aspect or the possible implementations of the first aspect.

A tenth aspect of this application provides a communication apparatus. The communication apparatus includes a processor, a memory, and a transceiver. The memory stores a computer program or computer instructions. The processor is configured to invoke and run the computer program or the computer instructions stored in the memory, to enable the processor to implement a processing operation in any one of the second aspect or the possible implementations of the second aspect. The transceiver is configured to receive and send signals, for example, implement receiving and sending operations in any one of the second aspect or the possible implementations of the second aspect.

An eleventh aspect of this application provides a communication apparatus. The communication apparatus includes a processor, a memory, and a transceiver. The memory stores a computer program or computer instructions. The processor is configured to invoke and run the computer program or the computer instructions stored in the memory, to enable the processor to implement a processing operation in any one of the third aspect or the possible implementations of the third aspect. The transceiver is configured to receive and send signals, for example, implement receiving and sending operations in any one of the third aspect or the possible implementations of the third aspect.

A twelfth aspect of this application provides a communication apparatus. The communication apparatus includes a processor, a memory, and a transceiver. The memory stores a computer program or computer instructions. The processor is configured to invoke and run the computer program or the computer instructions stored in the memory, to enable the processor to implement a processing operation in any one of the fourth aspect or the possible implementations of the fourth aspect. The transceiver is configured to receive and send signals, for example, implement receiving and sending operations in any one of the fourth aspect or the possible implementations of the fourth aspect.

A thirteenth aspect of this application provides a communication apparatus. The communication apparatus includes a processor. The processor is configured to perform any one of the first aspect or the possible implementations of the first aspect.

A fourteenth aspect of this application provides a communication apparatus. The communication apparatus includes a processor. The processor is configured to perform any one of the second aspect or the possible implementations of the second aspect.

A fifteenth aspect of this application provides a communication apparatus. The communication apparatus includes a processor. The processor is configured to perform any one of the third aspect or the possible implementations of the third aspect.

A sixteenth aspect of this application provides a communication apparatus. The communication apparatus includes a processor. The processor is configured to perform any one of the fourth aspect or the possible implementations of the fourth aspect.

The communication apparatus in the fifth aspect, the seventh aspect, the ninth aspect, the eleventh aspect, the thirteenth aspect, or the fifteenth aspect of this application may be a terminal device, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method in any one of the first aspect or the possible implementations of the first aspect. When the communication apparatus is the chip in the terminal device, the processing module may be a processor, and the transceiver module may be an input/output interface, a pin, a circuit, or the like. The processing module executes instructions stored in a storage module, to enable the terminal device to perform the method in any one of the first aspect or the possible implementations of the first aspect. The storage module may be a storage module (for example, a register or a buffer) in the chip, or may be a storage module (for example, a read-only memory or a random access memory) that is located outside the chip and that is in the terminal device.

The communication apparatus in the sixth aspect, the eighth aspect, the tenth aspect, the twelfth aspect, the fourteenth aspect, or the sixteenth aspect of this application may be a network device, or may be a chip in the network device. The communication apparatus may include a processing module and a transceiver module. When the communication apparatus is the network device, the processing module may be a processor, and the transceiver module may be a transceiver. The network device may further include a storage module, and the storage module may be a memory. The storage module is configured to store instructions, and the processing module executes the instructions stored in the storage module, to enable the network device to perform the method in any one of the second aspect or the possible implementations of the second aspect. When the communication apparatus is the chip in the network device, the processing module may be a processor, and the transceiver module may be an input/output interface, a pin, a circuit, or the like. The processing module executes instructions stored in a storage module, to enable the network device to perform the method in any one of the second aspect or the possible implementations of the second aspect. The storage module may be a storage module (for example, a register or a buffer) in the chip, or may be a storage module (for example, a read-only memory or a random access memory) that is located outside the chip and that is in the network device.

A seventeenth aspect of this application provides a computer program product including instructions. When the computer program product runs on a computer, the computer is enabled to perform any one of the first aspect or the possible implementations of the first aspect.

An eighteenth aspect of this application provides a computer program product including instructions. When the computer program product runs on a computer, the computer is enabled to perform any one of the second aspect or the possible implementations of the second aspect.

A nineteenth aspect of this application provides a computer program product including instructions. When the computer program product runs on a computer, the computer is enabled to perform any one of the third aspect or the possible implementations of the third aspect.

A twentieth aspect of this application provides a computer program product including instructions. When the computer program product runs on a computer, the computer is enabled to perform any one of the fourth aspect or the possible implementations of the fourth aspect.

A twenty-first aspect of this application provides a computer-readable storage medium, including computer instructions. When the instructions are run on a computer, the computer is enabled to perform any one of the first aspect or the possible implementations of the first aspect.

A twenty-second aspect of this application provides a computer-readable storage medium, including computer instructions. When the instructions are run on a computer, the computer is enabled to perform any one of the second aspect or the possible implementations of the second aspect.

A twenty-third aspect of this application provides a computer-readable storage medium, including computer instructions. When the instructions are run on a computer, the computer is enabled to perform any one of the third aspect or the possible implementations of the third aspect.

A twenty-fourth aspect of this application provides a computer-readable storage medium, including computer instructions. When the instructions are run on a computer, the computer is enabled to perform any one of the fourth aspect or the possible implementations of the fourth aspect.

A twenty-fifth aspect of this application provides a chip apparatus, including a processor, configured to invoke a computer program or computer instructions in a memory, to enable the processor to perform any one of the first aspect or the possible implementations of the first aspect.

Optionally, the processor is coupled to the memory through an interface.

A twenty-sixth aspect of this application provides a chip apparatus, including a processor, configured to invoke a computer program or computer instructions in a memory, to enable the processor to perform any one of the second aspect or the possible implementations of the second aspect.

Optionally, the processor is coupled to the memory through an interface.

A twenty-seventh aspect of this application provides a chip apparatus, including a processor, configured to invoke a computer program or computer instructions in a memory, to enable the processor to perform any one of the third aspect or the possible implementations of the third aspect.

Optionally, the processor is coupled to the memory through an interface.

A twenty-eighth aspect of this application provides a chip apparatus, including a processor, configured to invoke a computer program or computer instructions in a memory, to enable the processor to perform any one of the fourth aspect or the possible implementations of the fourth aspect.

Optionally, the processor is coupled to the memory through an interface.

A twenty-ninth aspect of this application provides a communication system. The communication system includes, for example, a terminal device and a network device. The terminal device is configured to perform the method in any one of the first aspect or the possible implementations of the first aspect. The network device is configured to perform any one of the second aspect or the possible implementations of the second aspect.

A thirtieth aspect of this application provides a communication system. The communication system includes, for example, a terminal device and a network device. The terminal device is configured to perform the method in any one of the third aspect or the possible implementations of the third aspect. The network device is configured to perform any one of the fourth aspect or the possible implementations of the fourth aspect.

For beneficial effects in any one of the second aspect to the thirtieth aspect and the possible implementations of the second aspect to the thirtieth aspect, refer to the corresponding descriptions of any one of the first aspect and the possible implementations of the first aspect for understanding. Details are not described herein again.

### BRIEF DESCRIPTION OF DRAWINGS

FIG. 1 is a diagram of an architecture of a communication system according to an embodiment of this application;
FIG. 2 is a diagram of an embodiment of a resource determining method according to an embodiment of this application;
FIG. 3A is a diagram of an example of a structure of a downlink time-frequency resource according to an embodiment of this application;
FIG. 3B is another diagram of an example of a structure of a downlink time-frequency resource according to an embodiment of this application;
FIG. 3C is another diagram of an example of a structure of a downlink time-frequency resource according to an embodiment of this application;
FIG. 3D is another diagram of an example of a structure of a downlink time-frequency resource according to an embodiment of this application;
FIG. 4A is another diagram of an example of a structure of a downlink time-frequency resource according to an embodiment of this application;
FIG. 4B is another diagram of an example of a structure of a downlink time-frequency resource according to an embodiment of this application;
FIG. 5A is another diagram of an example of a structure of a downlink time-frequency resource according to an embodiment of this application;
FIG. 5B is another diagram of an example of a structure of a downlink time-frequency resource according to an embodiment of this application;
FIG. 5C is another diagram of an example of a structure of a downlink time-frequency resource according to an embodiment of this application;
FIG. 5D is another diagram of an example of a structure of a downlink time-frequency resource according to an embodiment of this application;
FIG. 6A to FIG. 6C are diagrams of distributions of a first time-frequency resource in different slots;
FIG. 7 is another diagram of an embodiment of a resource determining method according to an embodiment of this application;
FIG. 8 is a diagram of a structure of a communication apparatus according to an embodiment of this application;
FIG. 9 is another diagram of a structure of a communication apparatus according to an embodiment of this application;
FIG. 10 is another diagram of a structure of a communication apparatus according to an embodiment of this application;
FIG. 11 is another diagram of a structure of a communication apparatus according to an embodiment of this application; and
FIG. 12 is another diagram of a structure of a communication apparatus according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that data termed in such a way are interchangeable in proper circumstances so that embodiments described herein can be implemented in an order other than the order illustrated or described herein. In addition, the terms "include", "have", and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such the process, method, product, or device.

Embodiments of this application provide a resource determining method, to quickly determine a time-frequency resource that cannot be used for transmission of user data and a DMRS. This application further provides a corresponding apparatus, system, computer-readable storage medium, computer program product, and the like. The following provides detailed descriptions separately.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system.

For ease of understanding, the following first describes a system architecture and an application scenario of a resource determining method provided in embodiments of this application.

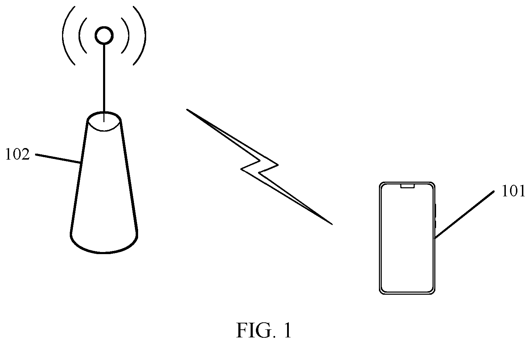

The solutions provided in embodiments of this application may be based on a new radio technology, also referred to as a 5G technology, or may be based on a subsequent evolved access standard. This is not specifically limited herein. In this embodiment and subsequent embodiments, a 5G-based communication system is used as an example for description. As shown in FIG. 1, the communication system includes a terminal device 101 and a network device 102. The terminal device 101 may receive a configuration of the network device 102, and perform transmission on downlink data or uplink data by using a time-frequency resource configured by the network device 102.

In an implementation, the resource determining method may be applied to a 5G-based vehicle-to-everything (vehicle-to-everything, V2X) system, to be specific, a system in which vehicle information is provided by a sensor, a vehicle-mounted terminal device, or the like loaded on a vehicle, to implement communication between the vehicle and another device. In the vehicle-to-everything system, a time-frequency resource may be used for data transmission in vehicle-to-vehicle (vehicle-to-vehicle, V2V), vehicle-to-infrastructure (vehicle-to-infrastructure, V2I), vehicle-to-network (vehicle-to-network, V2N), and vehicle-to-pedestrian (vehicle-to-pedestrian, V2P).

In another implementation, the resource determining method may be applied to a 5G-based internet-of-things (internet-of-things, IoT) system, for example, may be based on a narrowband internet of things (narrowband internet of things, NB-IoT) standard or an enhanced machine type communication (enhanced machine type communication, eMTC) standard. This is not specifically limited herein. In the system, an NB-IoT terminal or an eMTC terminal is a low-power-consumption terminal device, and may be connected in a low-power wide-area network (low-power wide-area network, LPWAN), and implement data transmission between the foregoing low-power-consumption terminal devices or data transmission between the low-power-consumption terminal device and the network device. Therefore, when the terminal device 101 is an NB-IoT terminal or an eMTC terminal, the terminal device 101 may receive, by using the time-frequency resource, data sent by the network device.

It should be understood that in addition to being applicable to the foregoing scenarios, the resource determining method in embodiments of this application may be further applicable to another scenario. This is not specifically limited herein.

In this embodiment of this application, the terminal device 101 may include a device that provides a user with voice and/or data connectivity, for example, may include a handheld device having a wireless connection function or a processing device connected to a wireless modem. The terminal device 101 may communicate with a core network via a radio access network (radio access network, RAN), and exchange a voice and/or data with the RAN. The terminal device 101 may include user equipment (user equipment, UE), a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal (remote terminal) device, an access terminal (access terminal) device, a user terminal (user terminal) device, a user agent (user agent), a user device (user device), or the like. For example, the terminal device 101 may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the vehicle-to-everything, a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the vehicle-to-everything may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a sweeper, a speaker, a set-top box, or the like.

In the vehicle-to-everything scenario, the terminal device 101 may be a vehicle-to-everything terminal device, and is also referred to as a V2X terminal device. Specifically, in a V2V communication process, the terminal device 101 may be the vehicle-mounted terminal. In a V2I communication process, the terminal device 101 may be the vehicle-mounted terminal or an infrastructure having a mobile communication function. In another V2X scenario, the terminal device 101 may alternatively be another V2X device. This is not specifically limited herein. The terminal device 101 may alternatively be a wearable device, such as glasses, gloves, a watch, clothing, and shoes, or another portable device that may be directly worn on a body or integrated into clothes or accessories of a user.

In an internet-of-things scenario, the terminal device 101 may be a limited device, for example, a low-power-consumption terminal device, a terminal device having a limited storage capability, or a terminal device having a limited computing capability. This is not specifically limited herein.

It should be understood that the terminal device 101 in this embodiment of this application may be a device in any one of the foregoing scenarios or a chip in the device. This is not specifically limited herein. Either being the device or the chip, the terminal device 101 can be manufactured, sold, or used as an independent product.

In addition, the network device 102 communicating with the terminal device 101 may be a device in a wireless network. For example, the network device is a device that is deployed in a radio access network and that provides a wireless communication function for the terminal device. For example, the network device may be a radio access network (radio access network, RAN) node that accesses the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system; or one antenna panel or a group of (including a plurality of antenna panels) antenna panels of a base station in the 5G mobile communication system. Alternatively, the network device may be a network node that forms a gNB or a transmission point, for example, a baseband unit (baseband unit, BBU) or a distributed unit (distributed unit, DU).

It should be understood that the network device 102 in this embodiment of this application may be any one of the foregoing devices or a chip in the device. This is not specifically limited herein. Either being the device or the chip, the network device 102 can be manufactured, sold, or used as an independent product.

For ease of understanding, the following describes, based on the architecture of the system shown in FIG. 1, a resource determining method provided in embodiments of this application.

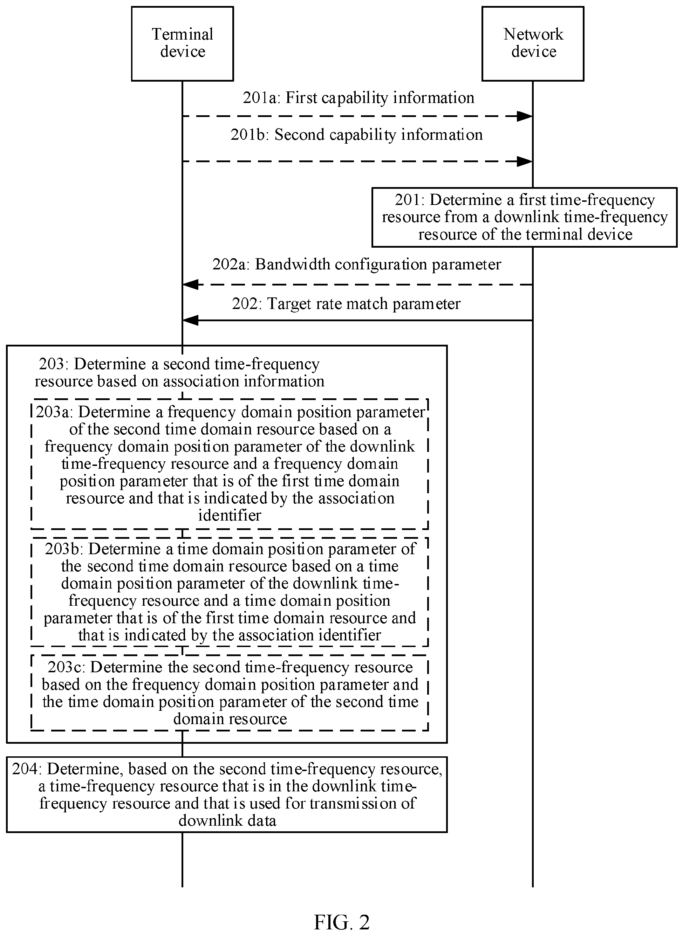

As shown in FIG. 2, an embodiment of a resource determining method according to an embodiment of this application includes the following steps.

201: A network device determines a first time-frequency resource from a downlink time-frequency resource of a terminal device.

In this embodiment of this application, the downlink time-frequency resource may be understood as a downlink bandwidth part (bandwidth part, BWP).

In this embodiment of this application, a time-frequency resource is a frequency domain resource and a time domain resource.

In this embodiment of this application, the frequency domain resource is a resource indicated by using a resource block (resource block, RB), a resource element (resource element, RE), or/and a resource block group (resource block group, RBG). One RB usually has 12 subcarriers, one RE is usually one subcarrier, and one RBG is usually N RBs. N is a positive integer preset in a protocol or configured by the network device. A frequency domain position parameter may be an index or a number of the RB, the RE, or the RBG.

In this embodiment of this application, the time domain resource is a resource indicated by using a slot (slot) or a time domain symbol (symbol). A time domain position parameter may be an index or a number of the slot or the symbol.

202: The network device sends a target rate match parameter to the terminal device. Correspondingly, the terminal device receives the target rate match parameter from the network device.

The target rate match parameter includes association information, and the association information indicates to associate at least one of a frequency domain position parameter or a time domain position parameter of the first time-frequency resource.

In this embodiment of this application, the target rate match parameter may be one set of rate match parameters determined by the network device from a plurality of sets of candidate rate match parameters, or may be one set of rate match parameters in a plurality of sets of rate match parameters configured by the network device. Each set of candidate rate match parameters includes at least one rate match parameter.

In this embodiment of this application, the association information may be an identifier or an index.

In this embodiment of this application, the first time-frequency resource may be a time-frequency resource that is in the downlink time-frequency resource configured by the network device for the terminal device and that is restricted from downlink use, or may be a time-frequency resource that is in the downlink time-frequency resource and that may be used for transmission of downlink data. When the first time-frequency resource is the time-frequency resource restricted from the downlink use, it indicates that the first time-frequency resource may be used for uplink transmission; may indicate that the first time-frequency resource includes a time-frequency resource used for transmission of uplink data and a guard time-frequency resource, where the guard time-frequency resource is located between the time-frequency resource used for the transmission of the uplink data and the time-frequency resource that is in the downlink time-frequency resource and that can be used for the transmission of the downlink data; may indicate that the first time-frequency resource cannot be used for either uplink transmission or downlink transmission; or may indicate that the first time-frequency resource may be simultaneously used for downlink transmission and uplink transmission, but for a same terminal device, the first time-frequency resource cannot be simultaneously used for the downlink transmission and the uplink transmission. "Simultaneously" herein indicates an orthogonal frequency division multiplexing (orthogonal frequency division multiplexing, OFDM) symbol or a same slot.

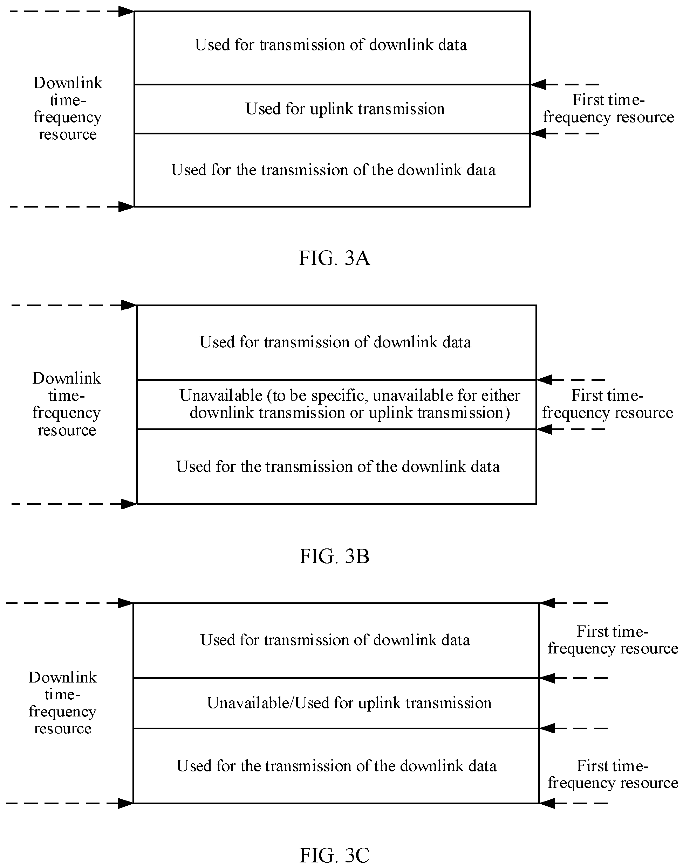

For the first time-frequency resource, refer to relationships between the first time-frequency resource and the downlink time-frequency resource shown in FIG. 3A to FIG. 3C for understanding.

As shown in FIG. 3A, the network device may configure the first time-frequency resource in the downlink time-frequency resource of the terminal device. The first time-frequency resource is used for uplink transmission. A time-frequency resource other than the first time-frequency resource is used for transmission of downlink data. In the scenario shown in FIG. 3A, the first time-frequency resource may be referred to as a subband (subband).

As shown in FIG. 3B, the network device may configure the first time-frequency resource in the downlink time-frequency resource of the terminal device. The first time-frequency resource is unavailable, to be specific, the first time-frequency resource cannot be used for either downlink transmission or uplink transmission. A time-frequency resource other than the first time-frequency resource is used for transmission of downlink data.

As shown in FIG. 3C, the network device may configure the first time-frequency resource in the downlink time-frequency resource of the terminal device. The first time-frequency resource is used for transmission of downlink data. A time-frequency resource other than the first time-frequency resource is used for transmission of uplink data, or is unavailable.

For the foregoing descriptions, FIG. 3A to FIG. 3C each illustrate merely a configuration manner. Actually, in this embodiment of this application, a position of the first time-frequency resource in the downlink time-frequency resource is not limited, and whether the first time-frequency resource is a segment of continuous resources or a plurality of segments of discontinuous resources is not limited.

203: The terminal device determines a second time-frequency resource based on the association information.

A frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in the downlink resource configured by the network device for the terminal device.

In this embodiment of this application, when the first time-frequency resource is the time-frequency resource restricted from the downlink use, the second time-frequency resource is the first time-frequency resource. When the first time-frequency resource is the time-frequency resource that is in the downlink time-frequency resource and that can be used for the transmission of the downlink data, a time-frequency domain position of the second time-frequency resource may be obtained based on a time-frequency domain position of the downlink time-frequency resource and a time-frequency domain position of the first time-frequency resource. Specifically, the terminal device may determine, as the second time-frequency resource, a time-frequency resource that is in the downlink time-frequency resource and that does not belong to the first time-frequency resource.

204: The terminal device determines, based on the second time-frequency resource, the time-frequency resource that is in the downlink time-frequency resource and that is used for the transmission of the downlink data.

After determining the time-frequency resource used for the transmission of the downlink data, the terminal device may receive the downlink data on the time-frequency resource used for the transmission of the downlink data.

Specifically, the terminal device receives downlink data scheduling information delivered by the network device. The downlink data scheduling information may be higher layer configuration signaling (for example, RRC signaling or MAC CE signaling), or may be physical layer downlink control signaling (for example, DCI). The downlink data scheduling information includes information about the time-frequency domain resource position at which a downlink data channel sent by the network device to the terminal device is located. The downlink data channel carries the downlink data sent to the terminal device. The terminal device determines, based on the information about the time-frequency domain resource position at which the downlink data channel is located and with reference to a position of the time-frequency resource that can be used for the transmission of the downlink data, an overlapping part of the time-frequency domain resource position at which the downlink data channel is located and the position of the time-frequency resource that can be used for the transmission of the downlink data, and receives, on a time-frequency resource of the overlapping part, the downlink data channel delivered by the network device. Alternatively, the terminal device may directly determine, based on the information about the time-frequency domain resource position at which the downlink data channel is located and with reference to information about a position of the second time-frequency resource, a time-frequency resource that is at the time-frequency domain resource position at which the downlink data channel is located but that is not at the position of the second time-frequency resource, and receive, on the time-frequency resource, the downlink data channel delivered by the network device.

In the solution provided in this embodiment of this application, the terminal device may determine, based on the association information in the target rate match parameter, a time-frequency resource that cannot be used for the transmission of the downlink data, and the network device does not need to specially send, to the terminal device, a bitmap used for rate match, so that communication overheads between the network device and the terminal device are reduced. In addition, the first time-frequency resource is usually continuous, so that computing overheads of determining, by the terminal device, the time-frequency resource that cannot be used for the transmission of the downlink data can be reduced.

Optionally, before or after step 202, or simultaneously, the following step 202a may be further included.

202a: The network device sends a bandwidth configuration parameter to the terminal device.
(1) When the bandwidth configuration parameter may include the frequency domain position parameter and the time domain position parameter of the first time-frequency resource, the association information in step 202 indicates to associate the frequency domain position parameter and the time domain position parameter of the first time-frequency resource.
(2) When the bandwidth configuration parameter includes the time domain position parameter of the first time-frequency resource, the target rate match parameter further includes the frequency domain position parameter of the second time-frequency resource, and the association information indicates to associate the time domain position parameter of the first time-frequency resource.
(3) When the bandwidth configuration parameter includes the frequency domain position parameter of the first time-frequency resource, the target rate match parameter further includes the time domain position parameter of the second time-frequency resource, and the association information indicates to associate the frequency domain position parameter of the first time-frequency resource.

Optionally, step 203 specifically includes steps 203a, 203b, and 203c.

203a: When the bandwidth configuration parameter includes the frequency domain position parameter of the first time-frequency resource, the terminal device determines the frequency domain position parameter of the second time domain resource based on a frequency domain position parameter of the downlink time-frequency resource and the frequency domain position parameter that is of the first time domain resource and that is indicated by the association identifier; or when the bandwidth configuration parameter does not include the frequency domain position parameter of the first time-frequency resource, the terminal device determines the frequency domain position parameter of the second time domain resource based on the frequency domain position parameter that is of the second time-frequency resource and that is in the target rate match parameter.

203b: When the bandwidth configuration parameter includes the time domain position parameter of the first time-frequency resource, the terminal device determines the time domain position parameter of the second time domain resource based on a time domain position parameter of the downlink time-frequency resource and the time domain position parameter that is of the first time domain resource and that is indicated by the association identifier; or when the bandwidth configuration parameter does not include the time domain position parameter of the first time-frequency resource, the terminal device determines the time domain position parameter of the second time domain resource based on the time domain position parameter that is of the second time-frequency resource and that is in the target rate match parameter.

203c: The terminal device determines the second time-frequency resource based on the frequency domain position parameter and the time domain position parameter of the second time domain resource.

Optionally, in this embodiment of this application, when the first time-frequency resource is the time-frequency resource that is in the downlink time-frequency resource and that is restricted from the downlink use, the time-frequency resource restricted from the downlink use includes the time-frequency resource used for the transmission of the uplink data; or the time-frequency resource restricted from the downlink use includes the time-frequency resource used for the transmission of the uplink data and the guard time-frequency resource, where the guard time-frequency resource is located between the time-frequency resource used for the transmission of the uplink data and the time-frequency resource that is in the downlink time-frequency resource and that is used for the transmission of the downlink data.

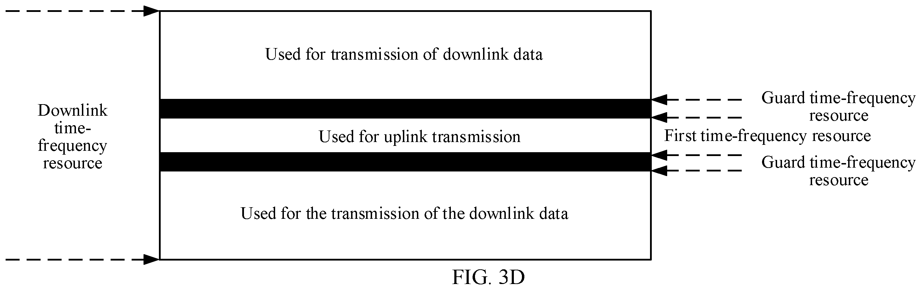

For a case in which the time-frequency resource restricted from the downlink use includes the time-frequency resource used for the transmission of the uplink data, refer to the foregoing descriptions in FIG. 3A for understanding. For a case in which the time-frequency resource restricted from the downlink use includes the time-frequency resource used for the transmission of the uplink data and the guard time-frequency resource, refer to FIG. 3D for understanding.

As shown in FIG. 3D, a guard time-frequency resource is configured between a time-frequency resource used for transmission of uplink data and a time-frequency resource used for transmission of downlink data. The guard time-frequency resource can be used to reduce interference between uplink transmission and downlink transmission.

Optionally, in this embodiment of this application, for the case shown in FIG. 3D, because a downlink subcarrier spacing of the downlink time-frequency resource may be different from an uplink subcarrier spacing of the first time-frequency resource, for example, the downlink subcarrier spacing is 30 kHz, and the uplink subcarrier spacing is 15 kHz, a subcarrier spacing may be 15 kHz or a configuration value provided by the network device, where the configuration value is not greater than 15 kHz. It is clear that 30 kHz and 15 kHz herein are merely examples for description. In this embodiment of this application, a specific value of the subcarrier spacing is not limited, and the downlink subcarrier spacing is not limited to being greater than the uplink subcarrier spacing. In this embodiment of this application, because the subcarrier spacing is usually a smaller one of the uplink subcarrier spacing and the downlink subcarrier spacing, a waste of downlink time-frequency resources is further reduced as much as possible while the interference between the uplink transmission and the downlink transmission is reduced, thereby improving time-frequency resource utilization.

Optionally, in an embodiment of this application, if a downlink subcarrier spacing of the downlink time-frequency resource is greater than an uplink subcarrier spacing of the first time-frequency resource, the target rate match parameter is configured based on the uplink subcarrier spacing, and if the terminal device determines that a first resource unit of the first time-frequency resource does not fully occupy (in other words, occupies but not fully occupies, or partially occupies) a second resource unit, the second resource unit is excluded from a time-frequency resource used by a user for transmission of downlink data, where the first resource unit is a resource block or a resource element configured based on the uplink subcarrier spacing, and the second resource unit is a resource block or a resource element configured based on the downlink subcarrier spacing.

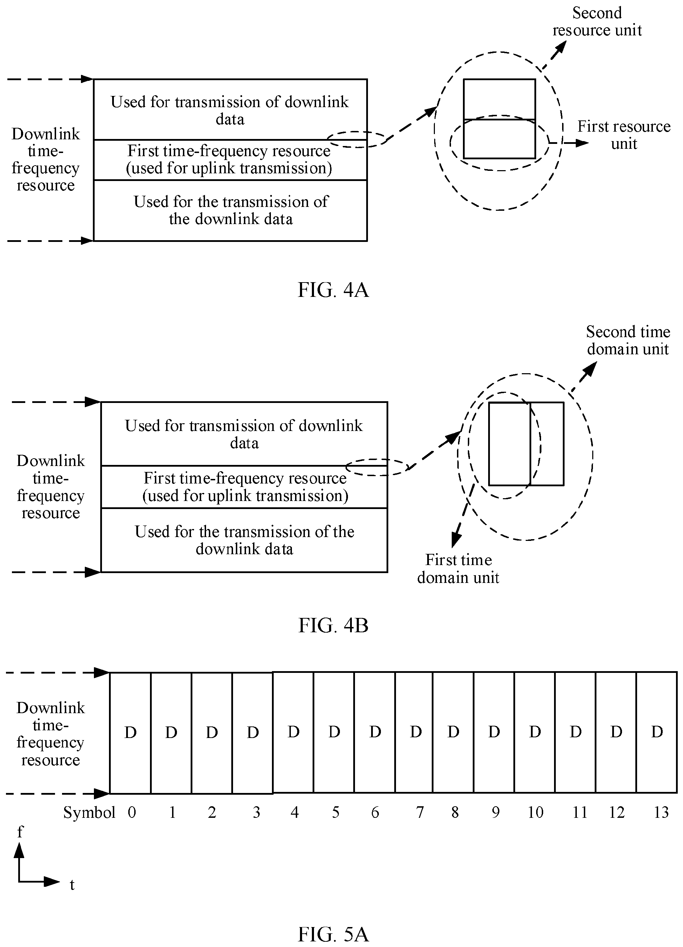

For this optional embodiment, refer to FIG. 4A for understanding. If the downlink subcarrier spacing of the downlink time-frequency resource is greater than the uplink subcarrier spacing of the first time-frequency resource, one downlink RE, one downlink RB, or one downlink RBG is not fully occupied (in other words, occupied but not fully occupied, or partially occupied) by one uplink RE, one uplink RB, or one uplink RBG at an uplink-downlink boundary. As shown in FIG. 4A, it can be learned from magnification of an RB, an RE, or an RBG at the uplink-downlink boundary that the first resource unit obtained based on the uplink subcarrier spacing occupies only half of the second resource unit obtained based on the downlink subcarrier spacing. In this case, the entire second resource unit needs to be excluded from a time-frequency resource used for transmission of downlink data, to avoid that a part that is of the second resource unit and that is not occupied by the first resource unit is used for the transmission of the downlink data, and downlink data transmission quality is affected.

Optionally, in an embodiment of this application, the bandwidth configuration parameter includes the time domain position parameter of the first time-frequency resource, and the downlink subcarrier spacing that is of the downlink time-frequency resource and that is configured by the network device is less than the uplink subcarrier spacing of the first time-frequency resource. If determining that a first time domain unit of the first time-frequency resource in time domain does not fully occupy a second time domain unit, the terminal device determines that the second time domain unit cannot be used for downlink transmission. The first time domain unit is a slot or a time domain symbol configured based on the uplink subcarrier spacing, and the second time domain unit is a slot or a time domain symbol configured based on the downlink subcarrier spacing.

For this optional embodiment, refer to FIG. 4B for understanding. Because there is a correspondence between a subcarrier spacing and a time domain length of one OFDM symbol, and one slot includes 14 or 12 OFDM symbols, a slot length corresponds to the subcarrier spacing. If the downlink subcarrier spacing of the downlink time-frequency resource is less than the uplink subcarrier spacing of the first time-frequency resource, there is also an uplink-downlink boundary in time domain. At the boundary position, one downlink slot or downlink time domain symbol may not be fully occupied by one uplink slot or uplink time domain symbol. As shown in FIG. 4B, a first time domain unit occupies half of a second time domain unit. In this case, the entire second time domain unit needs to be excluded from a time domain resource used for transmission of downlink data, to avoid that a part that is of the second time domain unit and that is not occupied by the first time domain unit is used for the transmission of the downlink data, and downlink data transmission quality is affected.

Optionally, when an index that is in the time domain position parameter of the first time domain resource and that indicates a time domain unit is a slot index, a slot indicated by the slot index includes either of the following: a downlink symbol but no flexible symbol; or a downlink symbol and a flexible symbol. The downlink symbol indicates a symbol used for downlink transmission, and the flexible symbol indicates a symbol that can be used for both downlink transmission and uplink transmission.

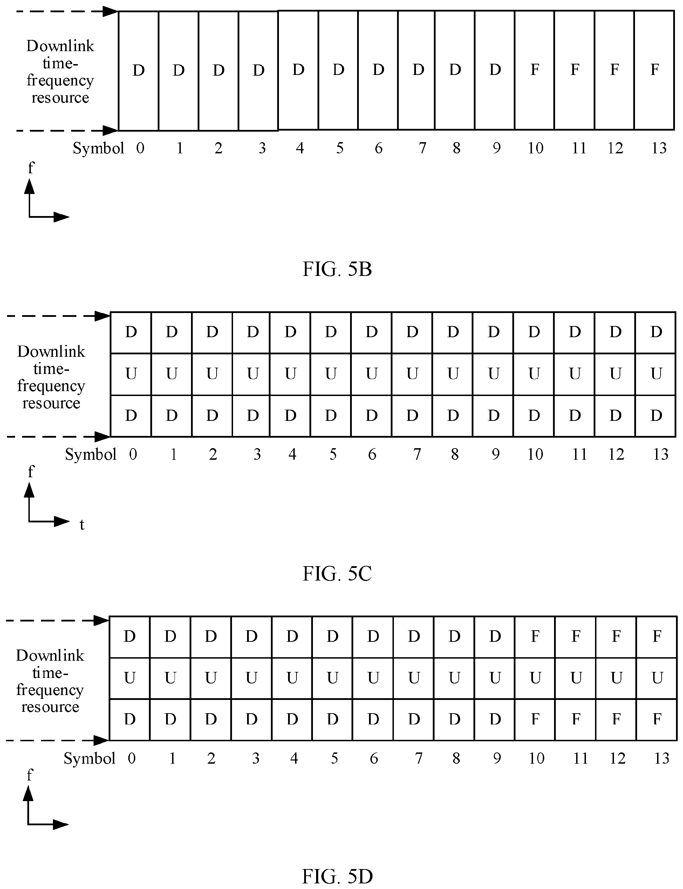

In this embodiment of this application, the slot index is usually numbered starting from 0, and may be represented as a slot 0, a slot 1, a slot 2, and so on. One slot usually includes 14 symbols (symbols). The 14 symbols may be all downlink symbols, or may include both the downlink symbol and the flexible symbol. For a structure of symbols in one slot, refer to FIG. 5A and FIG. 5B for understanding.

As shown in FIG. 5A, the slot includes downlink symbols but no flexible symbol. The slot shown in FIG. 5A includes 14 downlink symbols, the downlink symbol is represented by D, and indexes of the 14 downlink symbols are represented by 0, 1, 2, ..., and 13. As shown in FIG. 5B, the slot includes 10 downlink symbols and four flexible symbols. The downlink symbol is represented by D, and the flexible symbol is represented by F. It is clear that FIG. 5A and FIG. 5B herein are merely examples. In this embodiment of this application, quantities of downlink symbols and flexible symbols included in the slot are not limited.

When the downlink time-frequency resource is in the structure shown in FIG. 5A, the network device may configure, on the downlink symbol, the first time-frequency resource used for the uplink transmission. For the structure, refer to FIG. 5C for understanding. As shown in FIG. 5C, the first time-frequency resource is configured in the middle of downlink symbols, and U represents the first time-frequency resource.

When the downlink time-frequency resource is in the structure shown in FIG. 5B, the network device may configure, on the downlink symbol and the flexible symbol, the first time-frequency resource used for the uplink transmission. For the structure, refer to FIG. 5D for understanding. As shown in FIG. 5D, the first time-frequency resource is configured in the middle of downlink symbols and flexible symbols, and U represents the first time-frequency resource.

It should be noted that FIG. 5C and FIG. 5D herein are merely examples. In this embodiment of this application, occupation of the downlink symbol and the flexible symbol in the slot by an uplink symbol is not limited. For example, the first time-frequency resource may occupy only the downlink symbols in FIG. 5B, occupy only the flexible symbols in FIG. 5B, or occupy a part of the downlink symbols and a part of the flexible symbols in FIG. 5B.

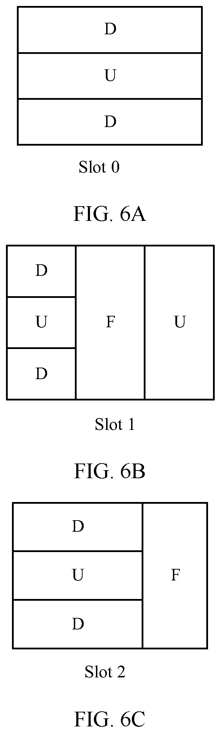

Optionally, in this embodiment of this application, distributions of the first time-frequency resource in N slots may be different, and N is an integer greater than 1. It is clear that the distributions of the first time-frequency resource in the N slots may alternatively be the same. With reference to FIG. 6A to FIG. 6C, the following uses an example in which the distributions of the first time-frequency resource in the N slots are different for description.

As shown in FIG. 6A, in a slot 0, the first time-frequency resource is distributed in the middle of downlink symbols, that is, a part represented by an uplink symbol.

As shown in FIG. 6B, in a slot 1, there are three parts in frequency domain. An uplink symbol is configured in the middle of downlink symbols in a first part; a flexible symbol is configured in a second part; and an uplink symbol is also configured in a third part. The part represented by the uplink symbol is the first time domain resource.

As shown in FIG. 6C, in a slot 2, there are two parts in frequency domain. An uplink symbol is configured in the middle of downlink symbols in a first part; and a flexible symbol is configured in a second part. The part represented by the uplink symbol is the first time domain resource.

In this embodiment of this application, step 201a and step 201b may be further included.

Distribution patterns of the second time-frequency resource in the N slots are different, in other words, there are N patterns of symbol distribution positions occupied by the second time-frequency resource in different slots. In this case, second time-frequency resources are counted as 1 or N when serving as candidate rate match patterns (rate match patterns), and the target rate match parameter is at least one parameter of one of the candidate rate match patterns. The target rate match parameter is usually a set of parameters, and one set of parameters corresponds to one candidate rate match pattern. The set of parameters includes the frequency domain position parameter and the time domain position parameter of the second time-frequency resource.

201a: The terminal device reports first capability information to the network device. Correspondingly, the network device receives the first capability information sent by the terminal device.

The first capability information indicates that the distribution patterns of the second time-frequency resource in the N slots are counted as 1 or N when serving as candidate rate match patterns (rate match patterns), and the target rate match parameter is the at least one parameter of one of the candidate rate match patterns.

In this embodiment of this application, the first capability information may indicate that, for example, the three patterns in FIG. 6A to FIG. 6C are considered as one candidate rate match pattern or three candidate rate match patterns.

201b: The terminal device reports second capability information to the network device. Correspondingly, the network device receives the second capability information sent by the terminal device.

The second capability information indicates a largest quantity of candidate rate match patterns that can be supported by the terminal device, and the target rate match parameter is at least one parameter of one of the candidate rate match patterns.

The second capability information may be indicated by using pdsch-RE-MappingFR1-PerSymbol/Perslot, or may be indicated by using another parameter different from pdsch-RE-MappingFR1-PerSymbol/Perslot. When the second capability information is indicated by using the another parameter different from pdsch-RE-MappingFR1-PerSymbol/Perslot, a quantity of rate match patterns that corresponds to the second capability information is not counted in the pdsch-RE-MappingFR1-PerSymbol/Perslot parameter. In other words, only a quantity of rate match patterns that is obtained by determining the second time-frequency resource in step 203 or 703 and that is in the second capability information is calculated, and an original rate match pattern in a bitmap manner (that is, an RB-symbol-level rate match pattern configured by using three bitmap parameters) is calculated in the pdsch-RE-MappingFRI-PerSymbol/Perslot parameter.

In this embodiment of this application, because the second time-frequency resource is one or more continuous resources that cannot be used for the downlink transmission, even if a downlink DMRS is carried on the second time-frequency resource, demodulation of other downlink data is not affected provided that the downlink DMRS part is removed. Therefore, in this embodiment of this application, the second time-frequency resource can be used to carry the downlink demodulation reference signal DMRS.

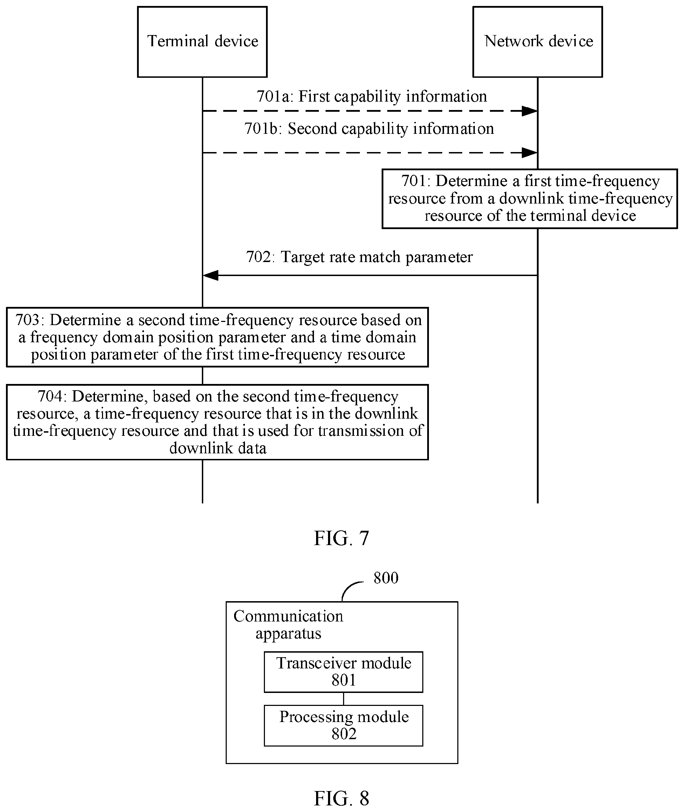

The foregoing describes a case in which the target rate match parameter includes the association information. Actually, in embodiments of this application, the target rate match parameter may alternatively not include the association information. For this case, refer to FIG. 7 for understanding.

As shown in FIG. 7, another embodiment of a resource determining method according to an embodiment of this application includes the following steps.

701: A network device determines a first time-frequency resource from a downlink time-frequency resource of a terminal device.

702: The network device sends a target rate match parameter to the terminal device. Correspondingly, the terminal device receives the target rate match parameter from the network device.

The target rate match parameter includes a frequency domain position parameter and a time domain position parameter of the first time-frequency resource.

703: The terminal device determines a second time-frequency resource based on the frequency domain position parameter and the time domain position parameter of the first time-frequency resource.

704: The terminal device determines, based on the second time-frequency resource, a time-frequency resource that is in the downlink time-frequency resource and that is used for transmission of downlink data.

In this possible embodiment, step 202a, step 203a, step 203b, and step 203c in the embodiment corresponding to FIG. 2 do not need to be performed. For other content, refer to the content in the embodiment corresponding to FIG. 2 for understanding. Details are not described herein again.

In this embodiment of this application, in a downlink bandwidth part, a symbol for which the first time-frequency resource is configured may be referred to as a first-type downlink symbol, and a symbol for which no first time-frequency resource is configured may be referred to as a second-type downlink symbol. In this case, an original rate match pattern in a bitmap manner (that is, an RB-symbol-level rate match pattern configured by using three bitmap parameters) may be used for the second-type downlink symbol but not used for the first-type downlink symbol, or an original rate match pattern in a bitmap manner may be used for the second-type downlink symbol and the first-type downlink symbol.

The rate match pattern in this embodiment of this application may be used for the first-type downlink symbol but not used for the second-type downlink symbol when the second time-frequency resource is determined in step 203 or 703, or the rate match pattern in this embodiment of this application may be used for the second-type downlink symbol and the first-type downlink symbol when the second time-frequency resource is determined in step 203 or 703.

The following describes communication apparatuses provided in embodiments of this application. FIG. 8 is a diagram of a structure of a communication apparatus according to an embodiment of this application. The communication apparatus 800 may be configured to perform steps performed by the terminal device in the embodiments shown in FIG. 2 to FIG. 7. For details, refer to the related descriptions in the foregoing method embodiments.

The communication apparatus 800 includes a transceiver module 801 and a processing module 802. The transceiver module 801 may implement a corresponding communication function. The processing module 802 is configured to process data. The transceiver module 801 may also be referred to as a communication interface or a communication unit.

Optionally, the communication apparatus 800 may further include a storage unit. The storage unit may be configured to store instructions and/or data. The processing module 802 may read the instructions and/or the data in the storage unit, so that the communication apparatus implements the foregoing method embodiments.

The communication apparatus 800 may be configured to perform an action performed by the terminal device in the foregoing method embodiments. The communication apparatus 800 may be a terminal device or a component that can be disposed in the terminal device. The transceiver module 801 is configured to perform a receiving-related operation on a terminal device side in the foregoing method embodiments. The processing module 802 is configured to perform a processing-related operation on the terminal device side in the foregoing method embodiments.

Optionally, the transceiver module 801 may include a sending module and a receiving module. The sending module is configured to perform a sending operation in the foregoing method embodiments. The receiving module is configured to perform a receiving operation in the foregoing method embodiments.

It should be noted that the communication apparatus 800 may include the sending module, but does not include the receiving module. Alternatively, the communication apparatus 800 may include the receiving module, but does not include the sending module. This may be specifically determined depending on whether the foregoing solution performed by the communication apparatus 800 includes a sending action and a receiving action.

In an example, the communication apparatus 800 is configured to perform an action performed by the terminal device in the embodiment shown in FIG. 2.

The transceiver module 801 is configured to receive a target rate match parameter from a network device.

The processing module 802 is configured to: determine a second time-frequency resource based on association information, and determine, based on the second time-frequency resource, a time-frequency resource that is in a downlink time-frequency resource and that is used for transmission of downlink data. A frequency domain position parameter of the second time-frequency resource is associated with a frequency domain position parameter of a first time-frequency resource, a time domain position parameter of the second time-frequency resource is associated with a time domain position parameter of the first time-frequency resource, and the second time-frequency resource is located in a downlink resource configured by a network device for the terminal device.

Optionally, the transceiver module 801 is further configured to perform steps 201a, 201b, and 203a in the embodiment shown in FIG. 2.

In an example, the communication apparatus 800 is configured to perform an action performed by the terminal device in the embodiment shown in FIG. 7. The processing module 802 is configured to perform steps 703 and 704 in the embodiment shown in FIG. 7. The transceiver module 801 is further configured to perform step 702 in the embodiment shown in FIG. 7.

It should be understood that a specific process in which the modules perform the foregoing corresponding steps has been described in detail in the foregoing method embodiments. For brevity, details are not described herein again.

The processing module 802 in the foregoing embodiment may be implemented by at least one processor or a processor-related circuit. The transceiver module 801 may be implemented by a transceiver or a transceiver-related circuit. The transceiver module 801 may also be referred to as a communication unit or a communication interface. The storage unit may be implemented by at least one memory.

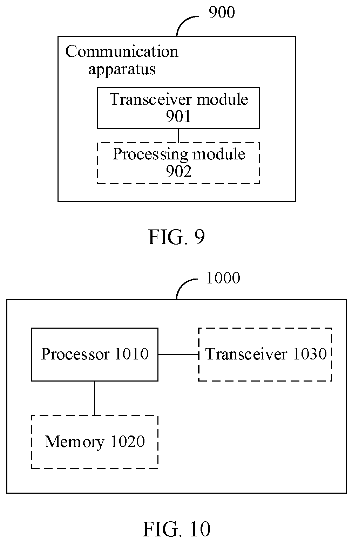

The following describes communication apparatuses provided in embodiments of this application. FIG. 9 is a diagram of a structure of a communication apparatus according to an embodiment of this application. The communication apparatus 900 may be configured to perform a step performed by the network device in the embodiment shown in FIG. 2. For details, refer to the related descriptions in the foregoing method embodiments.

The communication apparatus 900 includes a transceiver module 901. Optionally, the communication apparatus 900 further includes a processing module 902. The transceiver module 901 may implement a corresponding communication function. The processing module 902 is configured to process data. The transceiver module 901 may also be referred to as a communication interface or a communication unit.

The communication apparatus 900 may be configured to perform an action performed by the terminal device in the foregoing method embodiments. The communication apparatus 900 may be a network device or a component that can be disposed in the network device. The transceiver module 901 is configured to perform a receiving-related operation on a network device side in the foregoing method embodiments.

Optionally, the transceiver module 901 may include a sending module and a receiving module. The sending module is configured to perform a sending operation in the foregoing method embodiments. The receiving module is configured to perform a receiving operation in the foregoing method embodiments.

It should be noted that the communication apparatus 900 may include the sending module, but does not include the receiving module. Alternatively, the communication apparatus 900 may include the receiving module, but does not include the sending module. This may be specifically determined depending on whether the foregoing solution performed by the communication apparatus 900 includes a sending action and a receiving action.

In an example, the communication apparatus 900 is configured to perform an action performed by the network device in the embodiment shown in FIG. 2.

The processing module 902 is configured to determine a first time-frequency resource from a downlink time-frequency resource of a terminal device.

The transceiver module 901 is configured to send a target rate match parameter to the terminal device, where the target rate match parameter includes association information, the association information indicates to associate at least one of a frequency domain position parameter or a time domain position parameter of the first time-frequency resource, the association information is used by the terminal device to determine a second time-frequency resource, a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by a network device for the terminal device.

Optionally, the transceiver module 901 is further configured to perform steps 201a, 201b, and 202a in the embodiment shown in FIG. 2.

In an example, the communication apparatus 900 is configured to perform an action performed by the network device in the embodiment shown in FIG. 7. The processing module 902 is further configured to perform step 701 in the embodiment shown in FIG. 7. The transceiver module 901 is further configured to perform step 702 in the embodiment shown in FIG. 7.

It should be understood that a specific process in which the modules perform the foregoing corresponding steps has been described in detail in the foregoing method embodiments. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication unit or a communication interface. The storage unit may be implemented by at least one memory.

An embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the methods in the foregoing method embodiments are performed.

Optionally, the communication apparatus 1000 includes one or more processors 1010.

Optionally, as shown in FIG. 10, the communication apparatus 1000 may further include the memory 1020.

Optionally, the communication apparatus 1000 may include one or more memories 1020.

Optionally, the memory 1020 and the processor 1010 may be integrated together or separately disposed.

Optionally, as shown in FIG. 10, the communication apparatus 1000 may further include a transceiver 1030. The transceiver 1030 is configured to receive and/or send a signal. For example, the processor 1010 is configured to control the transceiver 1030 to receive and/or send the signal.

In a solution, the communication apparatus 1000 is configured to implement an operation performed by the terminal device in the foregoing method embodiments.

For example, the processor 1010 is configured to perform a processing related operation performed by the terminal device in the foregoing method embodiments. The transceiver 1030 is configured to perform receiving and sending-related operations performed by the terminal device in the foregoing method embodiments.

In another solution, the communication apparatus 1000 is configured to implement an operation performed by the network device in the foregoing method embodiments.

For example, the processor 1010 is configured to perform a processing related operation performed by the network device in the foregoing method embodiments. The transceiver 1030 is configured to perform receiving and sending-related operations performed by the network device in the foregoing method embodiments.

An embodiment of this application further provides a communication apparatus 1100. The communication apparatus 1100 may be a terminal device or a chip. The communication apparatus 1100 may be configured to perform an operation performed by the terminal device in the foregoing method embodiments.

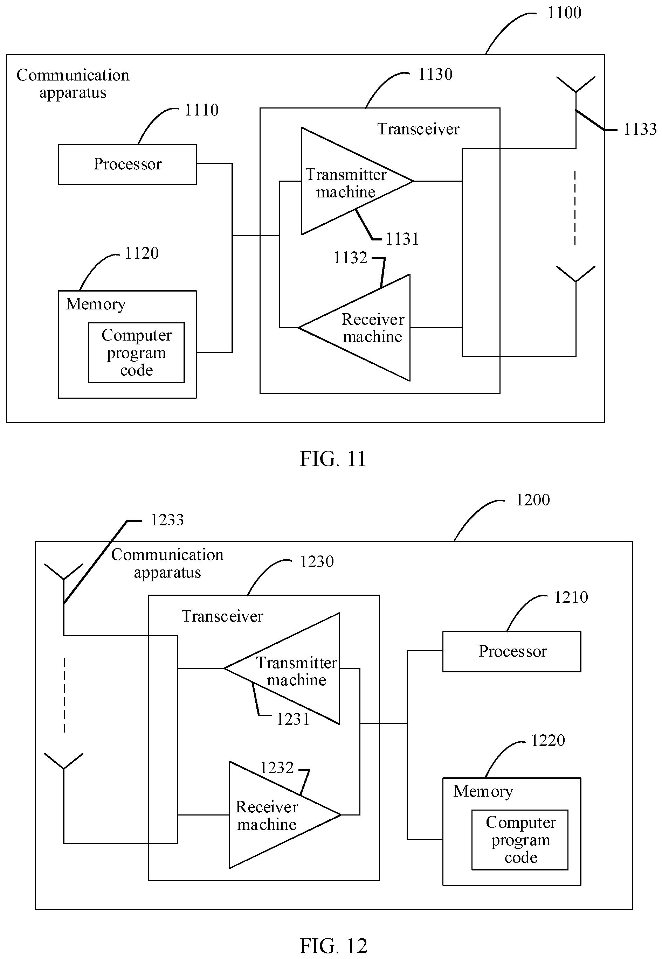

When the communication apparatus 1100 is the terminal device, FIG. 11 is a simplified diagram of a structure of the terminal device. As shown in FIG. 11, the terminal device includes a processor, a memory, and a transceiver. The memory may store computer program code. The transceiver includes a transmitter machine 1131, a receiver machine 1132, a radio frequency circuit (not shown in the figure), an antenna 1133, and an input/output apparatus (not shown in the figure). The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 11, the terminal device includes the processor 1110, the memory 1120, and the transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component that is in the transceiver 1130 and that is configured to implement a receiving function may be considered as a receiving unit, and a component that is in the transceiver 1130 and that is configured to implement a sending function may be considered as a sending unit. In other words, the transceiver 1130 includes a receiver and a transmitter. The transceiver may also be sometimes referred to as a transceiver machine, a transceiver unit, a transceiver circuit, or the like. The receiver sometimes may also be referred to as a receiver machine, a receiving unit, a receiving circuit, or the like. The transmitter sometimes may also be referred to as a transmitter machine, a transmitting unit, a transmitting circuit, or the like.

For example, in an implementation, the processor 1110 is configured to perform a processing action on a terminal device side in the embodiment shown in FIG. 2, and the transceiver 1130 is configured to perform receiving and sending actions on the terminal device side in FIG. 2. For example, the transceiver 1130 is configured to perform receiving and sending operations in step 202 in the embodiment shown in FIG. 2. The processor 1110 is configured to perform processing operations of step 203 and step 204 in the embodiment shown in FIG. 2. Optionally, the transceiver 1130 is further configured to perform receiving and sending operations in step 202a, step 201a, and step 202b in the embodiment shown in FIG. 2.

For example, in an implementation, the processor 1110 is configured to perform a processing action on a terminal device side in the embodiment shown in FIG. 7. The processor 1110 is configured to perform processing operations of step 703 and step 704 in the embodiment shown in FIG. 7.

It should be understood that FIG. 11 is merely an example rather than a limitation. The terminal device including the transceiver unit and the processing unit may not depend on the structure shown in FIG. 11.

When the communication apparatus 1100 is the chip, the chip includes a processor, a memory, and a transceiver. The transceiver may be an input/output circuit or a communication interface. The processor may be a processing unit, a microprocessor, or an integrated circuit integrated on the chip. A sending operation of the terminal device in the foregoing method embodiments may be understood as an output of the chip, and a receiving operation of the terminal device in the foregoing method embodiments may be understood as an input of the chip.

An embodiment of this application further provides a communication apparatus 1200. The communication apparatus 1200 may be a network device or a chip. The communication apparatus 1200 may be configured to perform an operation performed by the network device in the foregoing method embodiments.

When the communication apparatus 1200 is the network device, for example, a base station, FIG. 12 is a simplified diagram of a structure of the base station. The base station includes a part 1210, a part 1220, and a part 1230. The part 1210 is mainly configured to perform baseband processing, control the base station, and the like. The part 1210 is usually a control center of the base station, may be usually referred to as a processor, and is configured to control the base station to perform a processing operation on a network device side in the foregoing method embodiments. The part 1220 is mainly configured to store computer program code and data. The part 1230 is mainly configured to: receive and send a radio frequency signal, and perform conversion between the radio frequency signal and a baseband signal. The part 1230 may be usually referred to as a transceiver unit, a transceiver machine, a transceiver circuit, a transceiver, or the like. A transceiver unit in the part 1230 may also be referred to as a transceiver machine, a transceiver, or the like, and includes an antenna 1233 and a radio frequency circuit (not shown in the figure). The radio frequency circuit is mainly configured to perform radio frequency processing. Optionally, a component configured to implement a receiving function in the part 1230 may be considered as a receiver machine, and a component configured to implement a sending function may be considered as a transmitter machine. In other words, the part 1230 includes a receiver machine 1232 and a transmitter machine 1231. The receiver machine may also be referred to as a receiving unit, a receiver, a receiving circuit, or the like. The transmitter machine may be referred to as a transmitting unit, a transmitter, a transmitting circuit, or the like.

The part 1210 and the part 1220 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards simultaneously share one or more processors.

For example, in an implementation, the transceiver unit in the part 1230 is configured to perform receiving and sending-related steps performed by the network device in the embodiment shown in FIG. 2. A processor in part 1210 is configured to perform a processing-related step performed by the network device in the embodiment shown in FIG. 2.

It should be understood that FIG. 12 is merely an example rather than a limitation. The network device including the processor, the memory, and the transceiver may not depend on the structure shown in FIG. 12.

When the communication apparatus 1200 is the chip, the chip includes a transceiver, a memory, and a processor. The transceiver may be an input/output circuit or a communication interface. The processor is a processor, a microprocessor, or an integrated circuit integrated on the chip. A sending operation of the network device in the foregoing method embodiments may be understood as an output of the chip, and a receiving operation of the network device in the foregoing method embodiments may be understood as an input of the chip.

An embodiment of this application further provides a computer-readable storage medium. The computer-readable storage medium stores computer instructions for implementing the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

An embodiment of this application further provides a chip apparatus including a processor, configured to invoke a computer program or computer instructions stored in a memory, to enable the processor to perform the methods in the embodiments shown in FIG. 2 to FIG. 7.

In a possible implementation, an input of the chip apparatus corresponds to the receiving operation in the embodiments shown in FIG. 2 to FIG. 7, and an output of the chip apparatus corresponds to the sending operation in the embodiments shown in FIG. 2 to FIG. 7.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 2 to FIG. 7. The memory mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that, for convenient and brief description, for explanations and beneficial effects of the related content in any one of the communication apparatuses provided above, refer to the corresponding method embodiments provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes: any medium that can store program code, such as a USB flash disk, a removable hard disk drive, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to a part of the technical features thereof. However, these modifications or replacements do not cause the essence of the corresponding technical solution to depart from the scope of the technical solutions in embodiments of this application.

## Claims

1. A resource determining method, comprising:
receiving, by a terminal device, a target rate match parameter from a network device, wherein the target rate match parameter comprises association information, and the association information indicates to associate at least one of a frequency domain position parameter or a time domain position parameter of a first time-frequency resource;
determining, by the terminal device, a second time-frequency resource based on the association information, wherein a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by the network device for the terminal device; and
determining, by the terminal device based on the second time-frequency resource, a time-frequency resource that is in the downlink time-frequency resource and that is used for transmission of downlink data.

2. The method according to claim 1, wherein the method further comprises:
receiving, by the terminal device, a bandwidth configuration parameter from the network device, wherein the bandwidth configuration parameter comprises the frequency domain position parameter and the time domain position parameter of the first time-frequency resource; and
correspondingly, the association information indicates to associate the frequency domain position parameter and the time domain position parameter of the first time-frequency resource.

3. The method according to claim 1, wherein the method further comprises:
receiving, by the terminal device, a bandwidth configuration parameter, wherein
the bandwidth configuration parameter comprises the time domain position parameter of the first time-frequency resource, and correspondingly, the target rate match parameter further comprises the frequency domain position parameter of the second time-frequency resource, and the association information indicates to associate the time domain position parameter of the first time-frequency resource; or
the bandwidth configuration parameter comprises the frequency domain position parameter of the first time-frequency resource, and correspondingly, the target rate match parameter further comprises the time domain position parameter of the second time-frequency resource, and the association information indicates to associate the frequency domain position parameter of the first time-frequency resource.

4. The method according to any one of claims 1 to 3, wherein the first time-frequency resource is a time-frequency resource that is in the downlink time-frequency resource and that is restricted from downlink use, or the first time-frequency resource is the time-frequency resource that is in the downlink time-frequency resource and that is used for the transmission of the downlink data.

5. The method according to claim 4, wherein when the first time-frequency resource is the time-frequency resource that is in the downlink time-frequency resource and that is used for the transmission of the downlink data, the determining, by the terminal device, a second time-frequency resource based on the association information comprises:
determining, by the terminal device, the frequency domain position parameter of the second time domain resource based on a frequency domain position parameter of the downlink time-frequency resource and the frequency domain position parameter that is of the first time domain resource and that is indicated by the association identifier;
determining, by the terminal device, the time domain position parameter of the second time domain resource based on a time domain position parameter of the downlink time-frequency resource and the time domain position parameter that is of the first time domain resource and that is indicated by the association identifier; and
determining, by the terminal device, the second time-frequency resource based on the frequency domain position parameter and the time domain position parameter of the second time domain resource.

6. The method according to claim 4, wherein when the first time-frequency resource is the time-frequency resource that is in the downlink time-frequency resource and that is restricted from the downlink use,
the time-frequency resource restricted from the downlink use comprises a time-frequency resource used for transmission of uplink data; or
the time-frequency resource restricted from the downlink use comprises a time-frequency resource used for transmission of uplink data and a guard time-frequency resource, wherein the guard time-frequency resource is located between the time-frequency resource used for the transmission of the uplink data and the time-frequency resource that is in the downlink time-frequency resource and that is used for the transmission of the downlink data.

7. The method according to claim 4 or 6, wherein when an uplink subcarrier spacing that is of the first time-frequency resource and that is configured by the network device is different from a downlink subcarrier spacing of the downlink time-frequency resource, a subcarrier spacing of the guard time-frequency resource may be either of the following:
a smaller one of the uplink subcarrier spacing and the downlink subcarrier spacing; or
a configuration value of the network device, wherein the configuration value is not greater than a smaller one of the uplink subcarrier spacing and the downlink subcarrier spacing.

8. The method according to claim 4, 6, or 7, wherein the method further comprises:
if the downlink subcarrier spacing of the downlink time-frequency resource is greater than the uplink subcarrier spacing of the first time-frequency resource, the target rate match parameter is configured based on the uplink subcarrier spacing, and the terminal device determines that a first resource unit of the first time-frequency resource does not fully occupy a second resource unit, excluding the second resource unit from the time-frequency resource used by a user for the transmission of the downlink data, wherein the first resource unit is a resource block or a resource element configured based on the uplink subcarrier spacing, and the second resource unit is a resource block or a resource element configured based on the downlink subcarrier spacing.

9. The method according to claim 4 or 6, wherein the bandwidth configuration parameter comprises the time domain position parameter of the first time-frequency resource, and a downlink subcarrier spacing that is of the downlink time-frequency resource and that is configured by the network device is less than an uplink subcarrier spacing of the first time-frequency resource; and
if determining that a first time domain unit of the first time-frequency resource in time domain does not fully occupy a second time domain unit, the terminal device determines that the second time domain unit cannot be used for downlink transmission, wherein the first time domain unit is a slot or a time domain symbol configured based on the uplink subcarrier spacing, and the second time domain unit is a slot or a time domain symbol configured based on the downlink subcarrier spacing.

10. The method according to any one of claims 1 to 9, wherein when an index that is in the time domain position parameter of the first time domain resource and that indicates a time domain unit is a slot index, a slot indicated by the slot index comprises either of the following:
a downlink symbol but no flexible symbol; or
a downlink symbol and a flexible symbol.

11. The method according to any one of claims 1 to 10, wherein distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

12. The method according to claim 11, wherein the method further comprises:
reporting, by the terminal device, first capability information to the network device, wherein the first capability information indicates that the distribution patterns of the second time-frequency resource in the N slots are counted as 1 or N when serving as the candidate rate match patterns, and the target rate match parameter is the at least one parameter of one of the candidate rate match patterns.

13. The method according to claim 3, wherein when the target rate match parameter is configured at a cell level, the method further comprises:
receiving, by the terminal device, a reference subcarrier spacing of the first time-frequency resource, wherein the reference subcarrier spacing is different from a subcarrier spacing of the downlink time-frequency resource, and if the terminal device determines that a third resource unit of the first time-frequency resource does not fully occupy a fourth resource unit, the fourth resource unit is excluded from the time-frequency resource used by a user for the transmission of the downlink data, wherein the third resource unit is a resource block or a resource element configured based on the reference subcarrier spacing, and the fourth resource unit is a resource block or a resource element configured based on the downlink subcarrier spacing.

14. The method according to any one of claims 1 to 13, wherein the second time-frequency resource can be used to carry a downlink demodulation reference signal DMRS.

15. The method according to any one of claims 1 to 14, wherein the method further comprises:
reporting, by the terminal device, second capability information to the network device, wherein the second capability information indicates a largest quantity of candidate rate match patterns that can be supported by the terminal device, and the target rate match parameter is at least one parameter of one of the candidate rate match patterns.

16. A resource determining method, comprising:
determining, by a network device, a first time-frequency resource from a downlink time-frequency resource of a terminal device; and
sending, by the network device, a target rate match parameter to the terminal device, wherein the target rate match parameter comprises association information, the association information indicates to associate at least one of a frequency domain position parameter or a time domain position parameter of the first time-frequency resource, the association information is used by the terminal device to determine a second time-frequency resource, a frequency domain position parameter of the second time-frequency resource is associated with the frequency domain position parameter of the first time-frequency resource, a time domain position parameter of the second time-frequency resource is associated with the time domain position parameter of the first time-frequency resource, and the second time-frequency resource is located in a downlink resource configured by the network device for the terminal device.

17. The method according to claim 16, wherein the method further comprises:
sending, by the network device, a bandwidth configuration parameter to the terminal device, wherein the bandwidth configuration parameter comprises the frequency domain position parameter and the time domain position parameter of the first time-frequency resource; and
correspondingly, the association information indicates to associate the frequency domain position parameter and the time domain position parameter of the first time-frequency resource.

18. The method according to claim 16, wherein the method further comprises:
sending, by the network device, a bandwidth configuration parameter to the terminal device, wherein
the bandwidth configuration parameter comprises the time domain position parameter of the first time-frequency resource, and correspondingly, the target rate match parameter further comprises the frequency domain position parameter of the second time-frequency resource, and the association information indicates to associate the time domain position parameter of the first time-frequency resource; or
the bandwidth configuration parameter comprises the frequency domain position parameter of the first time-frequency resource, and correspondingly, the target rate match parameter further comprises the time domain position parameter of the second time-frequency resource, and the association information indicates to associate the frequency domain position parameter of the first time-frequency resource.

19. The method according to any one of claims 16 to 18, wherein the first time-frequency resource is a time-frequency resource that is in the downlink time-frequency resource and that is restricted from downlink use, or the first time-frequency resource is a time-frequency resource that is in the downlink time-frequency resource and that is used for transmission of downlink data.

20. The method according to any one of claims 16 to 18, wherein when an index that is in the time domain position parameter of the first time domain resource and that indicates a time domain unit is a slot index, a slot indicated by the slot index comprises either of the following:
a downlink symbol but no flexible symbol; or
a downlink symbol and a flexible symbol.

21. The method according to any one of claims 16 to 20, wherein distributions of the second time-frequency resource in N slots are different, N is an integer greater than 1, distribution patterns of the second time-frequency resource in the N slots are counted as 1 or N when serving as candidate rate match patterns, and the target rate match parameter is at least one parameter of one of the candidate rate match patterns.

22. The method according to claim 21, wherein the method further comprises:
receiving, by the network device, first capability information sent by the terminal device, wherein the first capability information indicates that the distribution patterns of the second time-frequency resource in the N slots are counted as 1 or N when serving as the candidate rate match patterns, and the target rate match parameter is the at least one parameter of one of the candidate rate match patterns.

23. The method according to any one of claims 16 to 22, wherein the second time-frequency resource can be used to carry a downlink demodulation reference signal DMRS.

24. The method according to any one of claims 16 to 23, wherein the method further comprises:
receiving, by the network device, second capability information sent by the terminal device, wherein the second capability information indicates a largest quantity of candidate rate match patterns that can be supported by the terminal device, and the target rate match parameter is at least one parameter of one of the candidate rate match patterns.

25. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 15.

26. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 16 to 24.

27. A computer-readable storage medium, storing a computer program, wherein when the computer program is executed by a communication apparatus, the communication apparatus is enabled to perform the method according to any one of claims 1 to 15, or perform the method according to any one of claims 16 to 24.

28. A computer program product comprising instructions, wherein when the computer program product runs on a computer, the computer is enabled to perform the method according to any one of claims 1 to 15, or perform the method according to any one of claims 16 to 24.
